# EUROPEAN PATENT APPLICATION

(11) **EP 1 161 084 A2**
(43) Date of publication of application: **05.12.2001**
(21) Application number: 01102898.2
(22) Date of filing: 15.02.2001
(51) Int. Cl.: H04N 5/44, H04N 5/00

(54) **Set top box output format selector and indicator**

(30) Priority: 31.03.2000 US 541103
(71) Applicant: MATSUSHITA ELECTRIC INDUSTRIAL CO., LTD., Kadoma-shi, Osaka 571-8501 (JP)
(72) Inventor: Bowser, Todd S., Yardley, PA 19067 (US); DeGeorge, Martin, Cinnaminson, NJ 08077 (US); DiServia, Mark J., Sewell, NJ 08080 (US); Levandowski, Mark C., Roslyn, PA 19001 (US)
(74) Representative: Schwabe - Sandmair - Marx

(57) **Abstract**

A digital television signal decoder for use with a number of different types of monitors has a control panel that includes a selector which allows a viewer to select between various output formats of the decoder. A display on the decoder panel is coupled to the selector to display an indication of selected output format. The viewer selects the output format of the decoder before connecting the decoder to the monitor. The control panel may be on the decoder itself or on a remote control device.

## Description

### FIELD OF THE INVENTION

The present invention relates to the field of digital television decoders. More specifically, the present invention relates to an apparatus that provides a visual indication of the output format of a digital television decoder that may be viewed without connecting the decoder to a monitor.

### BACKGROUND OF THE INVENTION

In the United States a standard, the Advanced Television System Committee (ATSC) standard defines digital encoding of high definition television (HDTV) signals. A portion of this standard is essentially the same as the MPEG-2 standard, proposed by the Moving Picture Experts Group (MPEG) of the International Organization for Standardization (ISO). The standard is described in an International Standard (IS) publication entitled, "Information Technology - Generic Coding of Moving Pictures and Associated Audio, Recommendation H.626", ISO/IEC 13818-2, IS, 11/94 which is available from ISO and which is hereby incorporated by reference for its teaching on the MPEG-2 digital video coding standard. Digital satellite broadcasts and digital cable systems also use MPEG encoding, both MPEG 1 and MPEG-2. While these encoding methods are presented as examples, it is contemplated that the subject invention may be practiced with any video coding method that supports multiple display formats.

Each of the MPEG standards is actually several different standards. In MPEG-2, for example, several different profiles are defined, each corresponding to a different level of complexity of the encoded image. For each profile, different levels are defined, each level corresponding to a different image resolution. One of the MPEG-2 standards, known as Main Profile, Main Level is intended for coding video signals conforming to existing television standards (i.e., NTSC and PAL). Another standard, known as Main Profile, High Level is intended for coding high-definition television images. Images encoded according to the Main Profile, High Level standard may have as many as 1,152 active lines per image frame and 1,920 pixels per line.

The Main Profile, Main Level standard, on the other hand, defines a maximum picture size of 720 pixels per line and 567 lines per frame. At a frame rate of 30 frames per second, signals encoded according to this standard have a data rate of 702 ∗ 567 ∗ 30 or 12,247,200 per second. By contrast, images encoded according to the Main Profile, High Level standard have a maximum data rate of 1,152 ∗ 1,920 ∗ 30 or 66,335,200 pixels per second. This data rate is more than five times the data rate of image date encoded according to the Main Profile Main Level standard. The standard for HDTV encoding in the United States is a subset of this standard, having as many as 1,080 line per frame, 1,920 pixels per line and a maximum frame rate, for this frame size, of 30 frames per second. The maximum data rate for this standard is still far greater than the maximum data rate for the Main Profile, Main Level standard.

The MPEG standards define a complex syntax which contains a mixture of data and control information. Some of this control information is used to enable signals having several different formats to be covered by the standard. These formats define images having differing numbers of picture elements (pixels) per line, differing numbers of lines per frame or field and differing numbers of frames or fields per second. In addition, the basic syntax of the MPEG Main Profile defines the compressed MPEG bit stream representing a sequence of images in five layers, the sequence layer, the group of pictures layer, the picture layer, the slice layer, and the macroblock layer. Each of these layers is introduced with control information. Finally, other control information, also known as side information, (e.g. frame type, macroblock pattern, image motion vectors, coefficient zig-zag patterns and dequantization information) are interspersed throughout the coded bit stream,

Format conversion of encoded high resolution Main Profile, High Level pictures to lower resolution Main Profile, High Level pictures; Main Profile, Main Level pictures, or other lower resolution picture formats, has gained increased importance for a) providing a single decoder for use with multiple existing video formats, b) providing an interface between Main Profile, High level signals and personal computer monitors or existing consumer television receivers, and c) reducing implementation costs of HDTV. For example, conversion allows replacement of expensive high definition monitors used with Main Profile, High Level encoded pictures with inexpensive existing monitors which have a lower picture resolution to support, for example, Main Profile. Main level encoded pictures, such as NTSC or 525 progressive monitors. One aspect, down conversion (DC), converts a high definition input picture into lower resolution picture for display on the lower resolution monitor.

To effectively receive the digital images, a decoder should process the video signal information rapidly. To be optimally effective, the decoding systems should be relatively inexpensive and yet have sufficient power to decode these digital signals in real time. Consequently, a decoder which supports conversion into multiple low resolution formats must minimize processor memory.

The disclosure of co-pending application 09/180.243 filed on March 11, 1998 is incorporated herein by reference for its teaching of digital television decoders.

Presently, some video monitors or television receivers are not capable of handling all of the various output formats of digital television decoders. As such, it is possible to damage a video monitor or television receiver if an incompatible signal is provided to the monitor or television. In conventional digital decoders, an indication of the type of signal output by the digital decoder can only be determined via an indication displayed on the screen of the monitor or television by the digital television decoder. This on-screen display (OSD) causes problems, however, when the decoder output is not suitable for the monitor and may result in damage to the monitor before the output signal format can be changed.

To overcome the aforementioned deficiencies of conventional digital television decoders, it is desirable to provide an indication of the output mode of the digital decoder before the decoder is connected to the monitor or before the monitor is activated, thereby eliminating the need for the OSD of the output format.

### SUMMARY OF THE INVENTION

The present invention is embodied in a digital television decoder which receives and decodes video signals that have been encoded in a plurality of different formats. The digital video decoder includes a panel having a selector for a viewer to select between a plurality of output formats of the decoder. The panel also has a display coupled to the selector for displaying to the viewer an indication of a selected one of the plurality of output formats responsive to the selection made by the viewer. The viewer selects the output format of the digital video decoder before the decoder is coupled to the monitor or the monitor is activated.

According to one aspect of the invention, the selector cycles between the various output formats of the digital video decoder.

According to another aspect of the invention, the display is a plurality of light emitting diodes.

According to yet another aspect of the invention, the display is a textual or graphic display.

According to a further aspect of the invention, each of the plurality of output formats of the decoder has a respective indicator.

According to another aspect of the invention, the selector is coupled to the decoder by a wireless link.

According to a further aspect of the invention, the display is coupled to the decoder by a wireless link.

### BRIEF DESCRIPTION OF THE DRAWINGS

The invention is best understood from the following detailed description when read in connection with the accompanying drawings. Included in the drawings are the following figures:
Figure 1 is a front panel configuration of a decoder according to a first exemplary embodiment of the present invention;
Figure 2 is a block diagram of the decoder shown in Figure 1;
Figure 3 is a front panel configuration of a decoder according to a second exemplary embodiment of the present invention;
Figure 4 is a block diagram according to a third exemplary embodiment of the present invention; and
Figure 5 is a flow chart of an exemplary method according to the present invention.

### DETAILED DESCRIPTION OF THE EXEMPLARY EMBODIMENT

The digital television signal decoder of the present invention is designed to support a number of different formats, while providing an indication of the selected format before the decoder is connected to the television or before the television is activated.

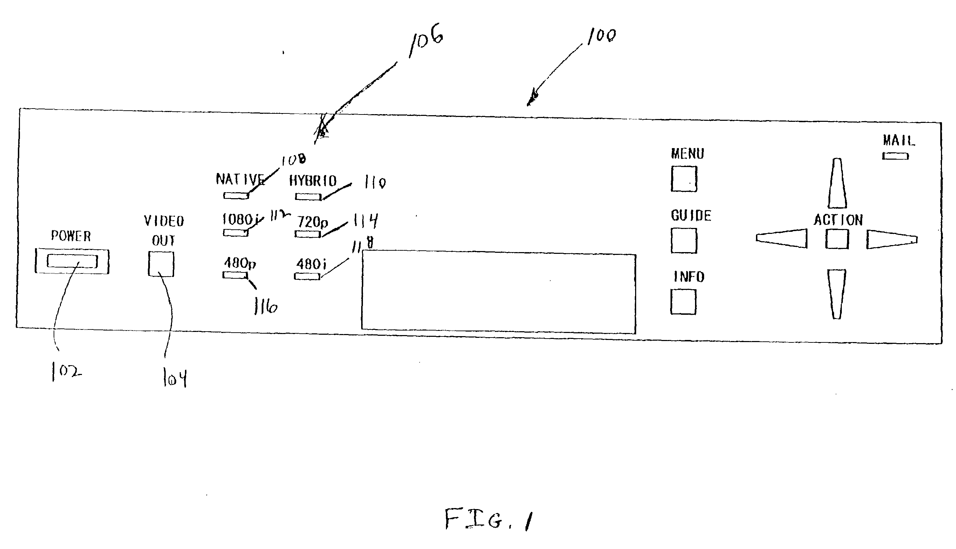

Figure 1 shows a panel configuration 100 of a digital decoder according to a first exemplary embodiment of the present invention. In Figure 1, panel 100 includes a power control 102, an output selector 104 and mode display 106. The output indicator 106 may include individual indicators 108, 110, 112, 114, 116, 118, for each of the various output modes of the digital decoder.

In the exemplary embodiment of Figure 1, the digital decoder provides a native output signal (as indicated by indicator 108), a hybrid output signal (as indicated by indicator 110), a 1080 line interlaced output signal (as indicated by indicator 112), a 720 line progressive output signal (as indicated by indicator 114), a 480 line progressive output signal (as indicated by indicator 116), and a 480 line interlaced output signal (as indicated by indicator 118).

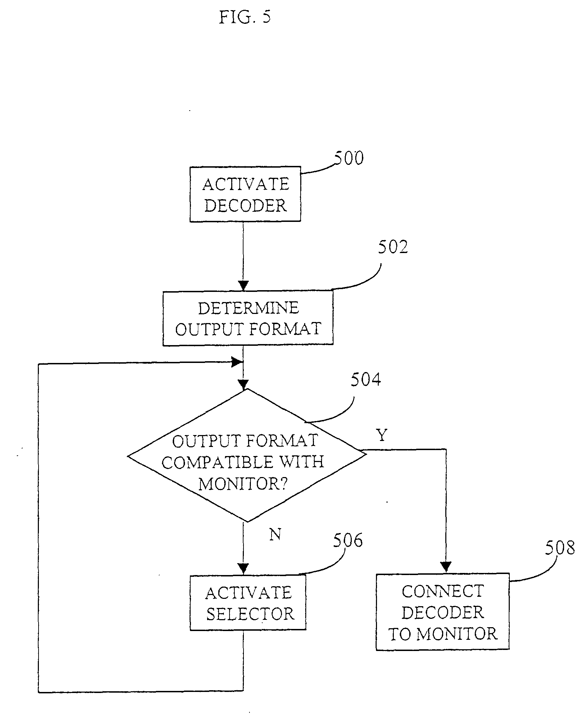

Referring to Figure 5 a flow chart is shown outlining an exemplary process to select a desired output mode of the digital decoder. At Step 500, the digital decoder is activated by Power switch 102, for example. When the digital decoder is initially activated after receipt by the viewer, or after being reset to initial factory parameters, one of the display indicators illuminates to advise the viewer which output mode is active. At Step 502, the viewer determines the type of monitor that will be connected to the decoder. At Step 504, the viewer determines whether the current output mode of the decoder is compatible with the television or monitor to which the decoder will be connected. If the output format is not compatible, at Step 506 the viewer may change the output mode through selector 104. Activating selector 104 will change to present output mode to another output mode according to a predetermined sequence. Step 504 is then repeated. Repetitive activation of selector 104 cycles the decoder through all of the available output modes. Once the viewer has selected an output mode compatible with the television or monitor, the decoder may be deactivated. At Step 508, the viewer then connects the decoder to the television or monitor.

In the exemplary flow-diagram shown in Figure 5, the monitor is connected after the compatible output format has been set to ensure that the monitor is not damaged by receiving vertical and horizontal synchronization signals at the wrong frequency. Most monitors include phase locked loops that adjust the frequency of the horizontal synchronization signal to match the received input signal. These horizontal synchronization signals are also used to generate high voltages in the television monitor. If the monitor receives horizontal synchronization signals at the wrong frequency, it may generate high voltage signals that are incompatible with the monitor. While almost all modern monitors include circuitry that prevents this type of damage from occurring, certain older monitors may need to be disconnected from the decoder until the output mode is set. Monitors that include the protection circuitry may be connected to the decoder while the output mode is being selected.

The last output mode selected is stored in a non-volatile or battery backed-up memory so that, upon reactivation of the digital television decoder, it will not be necessary to repeat the above procedure. Alternatively, the viewer may connect the decoder to the monitor before selecting the compatible output mode if the monitor is not activated during the output mode selection procedure.

Referring again to Figure 1, it is also contemplated that selector 104 may be replaced with individual selectors incorporated as part of each of indicators 108, 110, 112, 114, 116 and 118. In this way, a desired output mode may be directly selected by the viewer rather than requiring cycling through the various output modes.

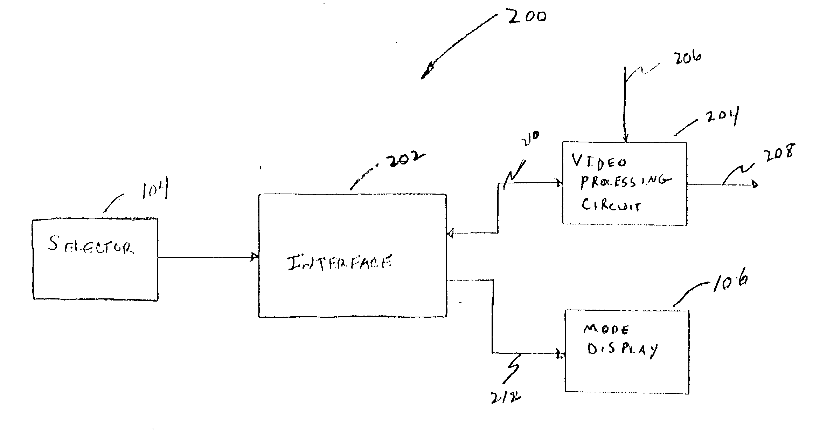

Figure 2 is a block diagram of the digital decoder according to the first exemplary embodiment of the present invention. In Figure 2, output selector 104 is connected to interface 202. Interface 202 is, in turn, connected to video processing circuit 204 and mode display 106. Interface 202 determines when the viewer activates output selector 104 and provides a signal 210 to video processing circuit 204 to change the output mode of the digital television decoder. The digital input signal 206 is then processed according to the selected mode by video processing circuit 204 and output as signal 208. Interface 202 also provides a signal 212 to mode display 106 to provide a visual indication to the viewer of the selected output mode.

In the native mode, the digital input signal 206 is passed through the video processing circuit 204 to become output signal 208 without down conversion. In the hybrid mode, the digital input signal corresponding to any mode below 1080 interlaced (i.e., 480I, 480P, and 720P) is passed through the video processing circuit 204 to become output signal 208 without down conversion. In this mode the 1080I digital input signal is down converted to one of the 480I. 480P or 720P output modes. In all other modes (480P, 480I and 720P) the digital input signal 206 is down converted to match the selected mode.

The present invention has advantages when the decoder is used with a native-mode or hybrid mode monitor. When, for example. a video signal is received as a 480I signal, these monitors will, by default, display the signal in 480I format. The viewer may prefer, however, to view the signal in some other format, for example, 480P. When used with a native mode or hybrid monitor. the subject invention allows a viewer to specify the output format of the video signal provided by the decoder and have an indication of that format displayed on the front panel of the decoder. This provides the viewer with knowledge that the format change has been made well before the decoder is able to provide video information in the new format.

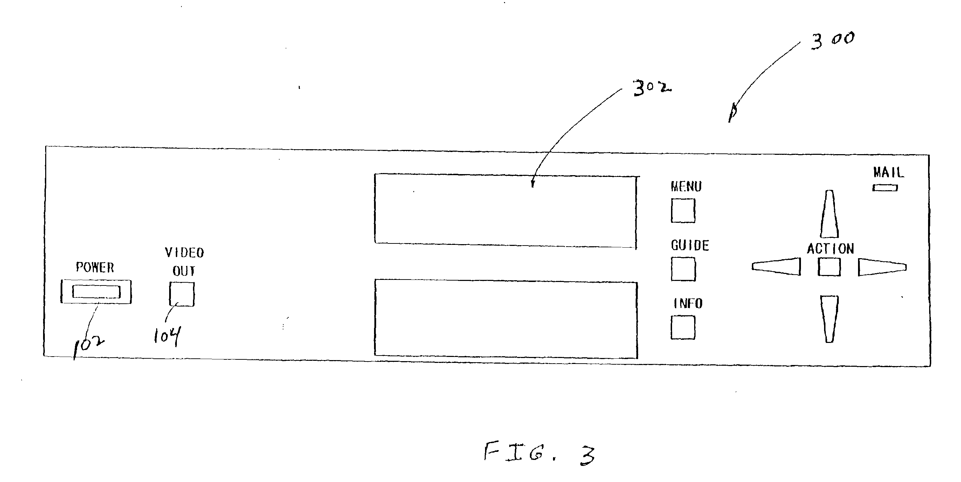

Figure 3 is a second exemplary embodiment of a digital television decoder panel 300 according to the present invention. In Figure 3, mode display 106 is replaced by a text or graphic based display 302. The display 302 may be, for example, a liquid crystal display, an electroluminescent display, a field emissive display, a plasma display, a light emitting diode display, an organic light emitting diode (OLED) display or other display device that may be configured to present text and/or graphics to a viewer. In all other aspects, the second exemplary embodiment is identical to the first exemplary embodiment. It is contemplated that, display 302 may be a single line or multi-line display providing the output mode of the decoder in combination with other information of interest to the viewer. The output mode may be constantly displayed. selectively displayed or periodically displayed depending on the desires of the viewer.

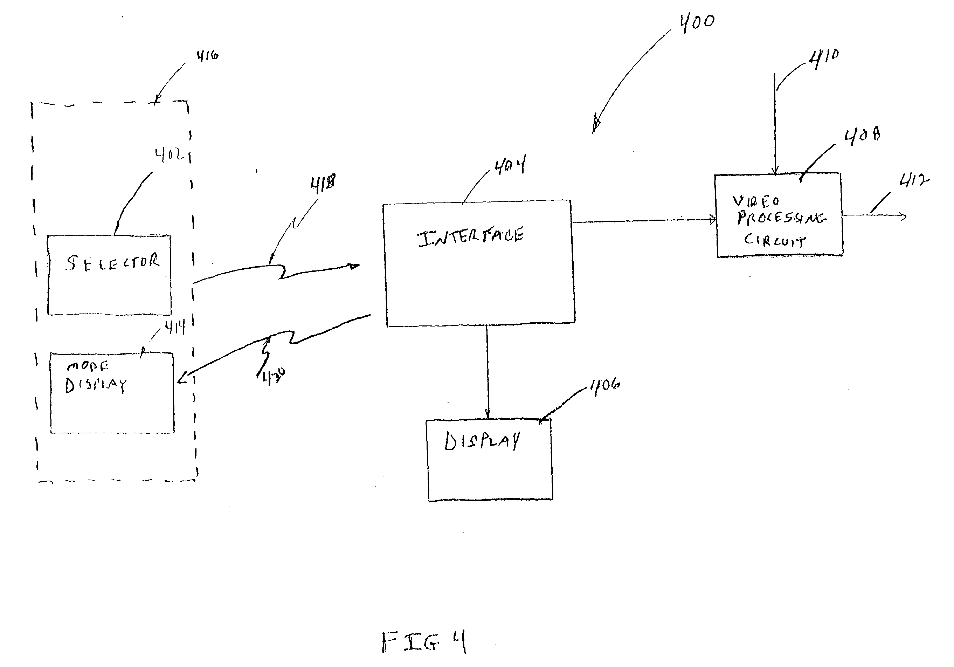

Figure 4 is a block diagram of a digital decoder 400 according to another exemplary embodiment of the present invention. In Figure 4, selector 402 is coupled to interface 404 through a wireless link 418. As in the first exemplary embodiment, the selector 402 may be a single selector by which the viewer cycles through the various output modes, or may be dedicated selectors for each of the various output modes allowing the viewer to "directly" select the desired output mode.

The output mode display may be on the panel of the digital television decoder as in the first exemplary embodiment (shown in Figure 4 as display 406) and/or may be collocated with the selector 402 in a remote control 416. In the latter configuration, mode display 414 is coupled to the interface 404 using a wireless link 420. Wireless links 418, 420 may be separate unidirectional links or may be a single bi-directional link. It is contemplated that the wireless links may be infrared (IR), audio frequency (e.g. ultrasonic) or radio frequency (RF) based links. It is also contemplated that the wireless link 420 may be eliminated. In this alternative embodiment, the remote control 416 may send a signal indicating the selected mode to the interface 404 and change the mode display responsive to the selection made by the viewer, without receiving any confirmation from the interface 404. The described remote control devices 416 allow the viewer to easily change or setup the output format of the decoder in a manner similar to other types of audio-video equipment.

While this invention has been described with reference to specific embodiments, it is not limited thereto. Accordingly, the appended claims should be construed to encompass not only those forms and embodiments of the invention specifically described above, but to such other forms and embodiments as may be devised by those skilled in the art without departing from its scope as defined by the appended claims.

## Claims

1. A digital television signal decoder for use with a monitor, the decoder having a panel comprising:
a selector for selecting between a plurality of output formats of the decoder, and
a display coupled to the selector for displaying an indication of a selected one of the plurality of output formats to the viewer responsive to a selection made using the selector, wherein the display is separate from the monitor.

2. A decoder according to claim 1, wherein the selector includes a single selection control and cycles through the plurality of output formats in response to successively activating of the selection control.

3. A decoder according to claim 1, wherein the selector includes a selector that is configured to receive a direct selection of a specified one of the plurality of output formats.

4. A decoder according to claim 1, wherein activation of the selector causes the decoder to switch between a current output format and a further output format of the plurality of output formats.

5. A decoder according to claim 1, wherein the display includes a plurality of light emitting diodes (LED's).

6. A decoder according to claim 1, wherein the display is one of a text and graphics display.

7. A decoder according to claim 6, wherein the display is selected from a group consisting of a liquid crystal display, an electroluminescent display, a light emitting diode display, an organic light emitting diode display, a field emissive display and a plasma display.

8. A decoder according to claim 1, wherein each of the plurality of output formats has a respective indicator.

9. A decoder according to claim 8, wherein the selector is a plurality of selectors, a respective one of the plurality of selectors coupled to each of the respective indicators.

10. A decoder according to claim 1, wherein the display indicates at least one output format selected from the group consisting of: i) 480 interlaced, ii) 480 progressive, iii) 720 progressive, iv) 1080 interlaced, v) native and vi) hybrid.

11. A digital television signal decoder for use with a monitor, the decoder comprising:
a keypad for selecting from among a plurality of output formats of the decoder.
an interface coupled to an output of the keypad, the keypad generating an output signal indicating a selected one of the plurality of output formats,
a display coupled to an output of the interface for indicating the selected one of the plurality of output formats, wherein the display is separate from the monitor, and
a video processor coupled to the interface for receiving the output signal from the interface, the video processor processing the digital television signal to produce an output signal compatible with the selected output format,
wherein the output format is selected before the decoder is coupled to the monitor.

12. A decoder according to claim 11, wherein the keypad is coupled to the interface using a wireless link.

13. A method for providing a decoded digital television signal to a monitor, comprising the steps of:
a) selecting from among a plurality of output formats of a decoder through a keypad,
b) displaying an indication of a selected one of the plurality of output formats to a viewer, the display responsive to a selection made by the selecting step, and
c) coupling the decoder to the monitor after the output format is selected by the viewer.

14. A method according to claim 13, comprising the further steps of:
d) decoding the television signal according to the selected output format, and
e) displaying the decoded television signal on the monitor.

15. A digital television signal decoder for use with a monitor. the decoder comprising:
a selector for selecting between a plurality of output formats of the decoder, and
a display coupled to the selector and separate from the monitor for displaying an indication of a selected one of the plurality of output formats to the viewer responsive to a selection made using the selector,
wherein the output format is selected before the decoder is at least one of coupled to the monitor and the monitor is activated.

16. A decoder according to claim 15, wherein the selector is coupled to the indicator using a wireless link.

17. A decoder according to claim 16, wherein the wireless link is one of an optical link, audio frequency, and a radio frequency (RF) link.

18. A decoder according to claim 17, wherein the optical link is an Infrared (IR) link.

19. A digital television decoding system for use with a monitor, the system comprising:
a keypad for selecting from among a plurality of output formats of a decoder;
the decoder including:
i) an interface coupled to the keypad, the keypad generating an output signal indicating a selected one of the plurality of output formats, and
ii) a video processor coupled to the interface for receiving the output signal from the interface, the video processor processing the digital television signal to produce an output signal in accordance with the selected output format: and
a display, separate from the monitor and coupled to an output of the interface, for indicating the selected one of the plurality of output formats.

20. A system according to claim 19, wherein at least one of the keypad and the indicator are coupled to the interface by a wireless link.
